# FASCICULE DE BREVET EUROPEEN

(11) **EP 2 424 722 B1**
(45) Date de publication et mention de la délivrance du brevet: **10.06.2015**
(21) Numéro de dépôt: 10727051.4
(22) Date de dépôt: 28.04.2010
(51) Int. Cl.: B29C 53/50, B29C 65/16

(54) **PROCEDE DE FABRICATION D'UNE GAINE A PARTIR D'UN FILM EN MATIERE PLASTIQUE**
VERFAHREN ZUR HERSTELLUNG EINER HÜLLE AUS EINER AUS EINEM KUNSTSTOFFMATERIAL HERGESTELLTEN FOLIE
METHOD FOR MAKING A SHEATH FROM A FILM MADE OF A PLASTIC MATERIAL

(30) Priorité: 30.04.2009 FR 0952900
(43) Date de publication de la demande: 07.03.2012
(73) Titulaire: Veriplast Decorative, 16340 L'Isle d'Espagnac (FR)
(72) Inventeur: AINS, Yannick, 16600 Magnac-sur-Touvre (FR)
(74) Mandataire: Thivillier, Patrick
(86) Numéro de dépôt international: PCT/FR2010/050803
(87) Numéro de publication internationale: WO 2010/125303

(56) Documents cités:
- EP-A- 0 588 456
- EP-A- 1 153 837
- FR-A- 2 805 198

## Description

L'invention se rattache au secteur technique du travail des matières plastiques, notamment pour la réalisation de manchons étirables.

Il est connu d'utiliser des manchons pour entourer la périphérie de corps volumétriques quelconques. Par exemple, ces manchons sont réalisés en polyéthylène et présentent une certaine élasticité pour être appliqués intimement contre la paroi externe du corps volumétrique considéré.

Différentes solutions techniques ont été proposées pour réaliser ces manchons.

Dans une forme de réalisation, les manchons sont obtenus à partir d'une gaine extrudée et soufflée. Cette solution n'est pas satisfaisante étant donné que, dans ce cas, l'impression que doit présenter les manchons finis, ne peut pas être effectuée à l'intérieur de la gaine, afin d'être située entre le corps volumétrique considéré et le polyéthylène. L'impression n'est donc pas protégée des éventuelles agressions extérieures.

On a proposé également de réaliser des manchons à partir d'un film en matière plastique. Le film est préalablement imprimé à plat, puis plié par tout moyen connu et approprié, sensiblement dans sa partie médiane, de sorte que ses bords longitudinaux parallèles et opposés sont disposés en recouvrement. Une soudure coupe est ensuite réalisée au niveau des deux bords en recouvrement pour refermer la gaine ainsi constituée en lui donnant ses dimensions finales. Par exemple, la soudure est réalisée au moyen d'une résistance dans laquelle passe un courant de manière à augmenter la température. La soudure ainsi réalisée est appelée « chair sur chair », puisque les deux faces intérieures du manchon, au niveau des bords en recouvrement, sont en contact. Dans ce cas, l'impression se trouve à l'intérieur du manchon (l'impression peut également se trouver à l'extérieur du manchon, dans ce cas on ne peut pas faire bénéficier de la protection du film à l'impression). Toutefois, l'impression ne peut pas être réalisée sur la totalité de la surface du film, étant donné que, dans ce cas, l'encre se trouverait entre les deux épaisseurs du film, rendant la soudure impossible.

Dans cette dernière forme de réalisation, il est donc nécessaire de prévoir une réserve d'impression située de part et d'autre de la soudure. Autrement dit, l'impression ne peut pas être réalisée sur la totalité de la largeur du film et doit nécessairement laisser subsister une zone non imprimée le long de chacun des bords longitudinaux du film. En outre, une chute est nécessaire au niveau du processus de soudure, en observant que cette chute doit être suffisamment large pour permettre d'avoir une tension constante lorsqu'elle est séparée du manchon. A titre indicatif, cette chute peut se situer entre 20 et 30 mm environ, soit, en considérant les deux bords superposés, une chute de l'ordre de 40 à 60 mm environ.

Un autre inconvénient se trouve dans le fait que ce type de soudure chair sur chair, entraîne la formation d'un bourrelet qui est visible et palpable lors de la prise du contenant équipé d'un tel manchon. On connaît aussi des manchons tubulaires réalisés à partir de films en matière plastique pliés de sorte que les bords longitudinaux du film sont disposés en recouvrement dit "cuir sur chair" puis soudés ou collés, voir par exemple EP 1 153 837 A1, FR 2 805 198 ou EP 0 588 456 A2.

Le problème que se propose de résoudre l'invention est de réaliser des manchons en matière plastique, notamment du type étirable, à partir, par exemple, d'un film polyéthylène coextrudé ou non, avec, pour objectif, de supprimer le bourrelet de soudure, de diminuer les chute nécessaires, de réaliser une impression interne sur toute la surface, d'augmenter au maximum la sécurité en terme de distance des soudures pour obtenir, d'une manière significative, une réduction des coûts et une diminution des déchets.

Pour résoudre un tel problème, il a été conçu et mis au point un procédé de fabrication d'une gaine à partir d'un film en matière plastique, selon la revendication 1.

Comme indiqué, l'invention trouve une application particulièrement avantageuse pour la réalisation de manchons étirables.

Dans ces conditions, on découpe transversalement la gaine pour réaliser la hauteur souhaitée des manchons aptes à être posés sur un contenant.

Pour résoudre le problème posé de contrôler les dimensions finales du manchon et de séparer le recouvrement des faces opposées de la gaine notamment au niveau de la zone où est effectuée la soudure, on dispose, à l'intérieur de la gaine résultant du pliage du film, un conformateur apte à séparer le recouvrement des faces opposées de ladite gaine.

Pour résoudre le problème posé d'éviter un éventuel échauffement susceptible d'endommager la gaine, le conformateur présente un système de refroidissement. Selon l'invention, on réalise une soudure en continu. Dans une forme de réalisation avantageuse, le film est entraîné linéairement à vitesse constante par rapport au poste de soudure qui est fixe. Le film est entraîné à une vitesse d'au moins 200 m/mn environ.

Avantageusement, pour obtenir des manchons étirables, le film est du polyéthylène (co-extrudé ou non) d'épaisseur comprise entre 40 µm et 120 µm environ.

A partir des caractéristiques à la base du procédé de l'invention, soit le recouvrement est centré par rapport à la largeur du film, soit le recouvrement est décalé par rapport à la largeur du film.

L'invention est exposée ci-après plus en détail à l'aide des figures des dessins annexés dans lesquels :
- la figure 1 est une vue en perspective d'une partie de film montrant l'impression à plat de l'une des faces du film ;
- la figure 2 est une vue en perspective montrant le pliage du film en vue de soumettre une partie du film en recouvrement et en contact, à l'opération de soudure ;
- la figure 3 est une vue en coupe transversale montrant le principe à la base du procédé selon l'invention.

Pour la mise en oeuvre du procédé, on utilise, à titre d'exemple indicatif, nullement limitatif, un film polyéthylène, coextrudé ou non, d'épaisseur comprise entre 40 µm et 120 µm environ. Ce film (1) peut être blanc ou transparent.

D'une manière parfaitement connue pour un homme du métier, le film (1) résulte d'un procédé classique d'extrusion bulle de polyéthylène et découpe en ligne pour réaliser des bobines.

Selon une caractéristique de l'invention, on imprime à plat le film (1) sur l'une de ses faces (1a), en laissant subsister une zone non imprimée (1b) le long de l'un de ses bords longitudinaux (1c). L'impression (2) peut, par exemple, être réalisée en flexographie ou en héliogravure.

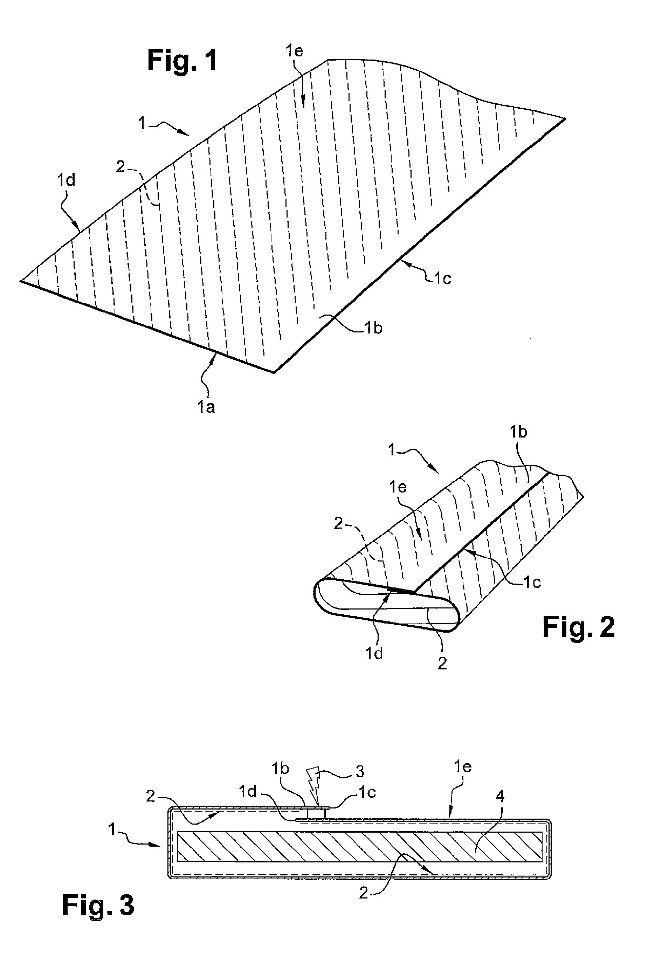

Le film est ensuite plié, de sorte que la zone non imprimée (1b) de la face imprimée (1a) soit en recouvrement du bord opposé (1d) de la face non imprimée (1e) (figure 2).

A noter que le recouvrement résultant des deux épaisseurs du film au niveau des bords (1c) et (1d) et de la zone non imprimée (1b), peut être centré par rapport à la largeur du film ou bien décalé à droite ou à gauche par rapport à ladite largeur.

Une opération de soudure (3), par laser, est ensuite effectuée au niveau du recouvrement précité.

Avantageusement, un conformateur (4), sous forme par exemple d'une pièce métallique, est disposé à l'intérieur de la gaine ainsi formée. Ce conformateur (4) a notamment pour fonction de séparer le recouvrement des faces opposées (1a), (1e), pour permettre, par conséquent, une liaison par soudure des deux bords en recouvrement (1c) et (1d). Ce conformateur (4) peut présenter un système de refroidissement pour éviter un échauffement éventuel.

Les dimensions du conformateur (4), correspondent sensiblement à celles du périmètre de la gaine.

Les deux épaisseurs du film qui constituent le recouvrement, à savoir la zone non imprimée (1b) sur le bord opposé (1d) de la face non imprimée, sont maintenues l'une contre l'autre, puis soumises à l'opération de soudure en tant que telle (3). La soudure est réalisée en continu. Dans une forme de réalisation, le film (1) est entraîné linéairement, à vitesse constante par rapport au poste de soudure (3) qui est fixe. A titre d'exemple, de manière à obtenir une solution économiquement viable, le film est entraîné à une vitesse linéaire de l'ordre de 200 m/mn. Le laser, utilisé pour la soudure (3), présente une puissance avantageusement supérieure à 1000 watts.

D'une manière parfaitement connue pour un homme du métier, ce type de soudure est appelé cuir sur chair, étant donné que la face externe de l'une des épaisseurs du film est en contact avec la face interne de l'autre. Le laser (3) permet de concentrer localement et précisément une quantité d'énergie suffisante pour réaliser ce type de soudure à des vitesses acceptables.

Ce procédé permet d'obtenir une impression interne sans réserve, à l'exception de la zone non imprimée (1b), la continuité du graphisme étant assurée sans que l'encre ne se trouve entre les deux épaisseurs. Après réalisation de la soudure, aucune surépaisseur n'apparaît.

En comparaison de l'état antérieur de la technique, tel qu'exposé dans la partie introductive de la description, une chute comprise entre 40 et 60 mm comme indiqué était nécessaire, tandis que, selon l'invention, cette chute est de l'ordre de 6 mm.

La gaine, ainsi réalisée, peut avantageusement être utilisée pour la réalisation de manchons, par tout moyen connu et approprié. La gaine est, par conséquent, découpée transversalement pour réaliser des manchons aptes à être posés sur un contenant selon les dimensions souhaitées, notamment en hauteur.

Après mise en place du manchon sur le contenant, l'impression (2) apparaît à l'intérieur en étant, par conséquent, protégée des éventuelles agressions extérieures.

Les avantages ressortent bien de la description, en particulier on souligne et on rappelle :
- la diminution des chutes nécessaires pour la fabrication des manchons étirables qui génère des gains économiques tout en respectant l'environnement ;
- la suppression de toute surépaisseur au niveau de la soudure ;
- la possibilité de proposer un manchon étirable avec une impression interne sur toute la surface ;
- l'augmentation de la marge de sécurité en termes de résistance des soudures permettant d'augmenter la production.

## Revendications

1. Procédé de fabrication d'une gaine à partir d'un film (1) en matière plastique selon lequel :
- on imprime à plat le film (1) sur l'une de ses faces (1a) en laissant subsister une zone non imprimée (1b) le long de l'un de ses bords longitudinaux (1c) ;
- on plie le film (1) de sorte que la zone non imprimée (1b) de la face imprimée (1a) soit en recouvrement du bord opposé (1d) de la face non imprimée (1e) ;
- on réalise en continu une soudure (3) laser au niveau du recouvrement résultant des deux épaisseurs du film.

2. Procédé selon la revendication 1, **caractérisé en ce qu'**on découpe transversalement la gaine pour réaliser, à la hauteur souhaitée, des manchons aptes à être posés sur un contenant.

3. Procédé selon la revendication 1, **caractérisé en ce qu'**on dispose, à l'intérieur de la gaine résultant du pliage du film (1), un conformateur (4) apte à séparer le recouvrement des faces opposées de la gaine.

4. Procédé selon la revendication 3, **caractérisé en ce que** le conformateur (4) présente un système de refroidissement.

5. Procédé selon l'une quelconque des revendications 3 et 4, **caractérisé en ce que** le conformateur a des dimensions correspondant sensiblement à celles du périmètre de la gaine.

6. Procédé selon l'une quelconque des revendications 1 à 5, **caractérisé en ce que** le film (1) est entraîné linéairement à vitesse constante par rapport au poste de soudure (3) qui est fixe.

7. Procédé selon la revendication 6, **caractérisé en ce que** le film est entraîné à une vitesse d'au moins 200 m/mn environ.

8. Procédé selon la revendication 1, **caractérisé en ce que** le film (1) est du polyéthylène co-extrudé ou non d'épaisseur comprise entre 40 µm et 120 µm environ.

9. Procédé selon l'une quelconque des revendications 1 à 8, **caractérisé en ce que** le recouvrement est centré par rapport à la largeur du film (1).

10. Procédé selon l'une quelconques des revendications 1 à 8, **caractérisé en ce que** le recouvrement est décalé par rapport à la largeur du film (1).

## Patentansprüche

1. Herstellungsverfahren einer Hülle aus einer Folie (1) aus Plastik, nach dem:
- die Folie (1) auf einer ihrer Seiten (1a) flach bedruckt wird, indem ein nicht bedruckter Bereich (1b) entlang einer ihrer Längsränder (1c) übrig gelassen wird;
- die Folie (1) derart gefaltet wird, dass der nicht bedruckte Bereich (1b) der bedruckten Seite (1a) einen Umschlag des entgegengesetzten Randes (1d) der nicht bedruckten Seite (1e) bildet;
- kontinuierlich eine Laser-Schweißnaht (3) auf der Höhe der aus den zwei Dicken der Folie resultierenden Abdeckung realisiert wird.

2. Verfahren gemäß Anspruch 1, **dadurch gekennzeichnet, dass** die Hülle transversal zugeschnitten wird, um auf der gewünschten Höhe Stutzen zu realisieren, die geeignet sind, auf einem Behälter aufgesetzt zu werden.

3. Verfahren gemäß Anspruch 1, **dadurch gekennzeichnet, dass** im Innern der aus dem Falten der Folie (1) resultierenden Hülle ein Former (4) angeordnet wird, der geeignet ist, die Abdeckung der gegenüberliegenden Seiten der Hülle zu trennen.

4. Verfahren gemäß Anspruch 3, **dadurch gekennzeichnet, dass** der Former (4) ein Kühlsystem aufweist.

5. Verfahren gemäß irgendeines der Ansprüche 3 und 4, **dadurch gekennzeichnet, dass** der Former Abmessungen hat, die deutlich denen des Umfangs der Hülle entsprechen.

6. Verfahren gemäß irgendeines der Ansprüche 1 bis 5, **dadurch gekennzeichnet, dass** die Folie (1) linear bei konstanter Geschwindigkeit im Verhältnis zum Schweißposten (3) angetrieben wird, der fest ist.

7. Verfahren gemäß Anspruch 6, **dadurch gekennzeichnet, dass** die Folie bei einer Geschwindigkeit von wenigstens rund 200 m/min angetrieben wird.

8. Verfahren gemäß Anspruch 1, **dadurch gekennzeichnet, dass** die Folie (1) koextrudiertes oder nicht koextrudiertes Polyethylen mit einer zwischen rund 40 µm und 120 µm inbegriffenen Dicke ist.

9. Verfahren gemäß irgendeines der Ansprüche 1 bis 8, **dadurch gekennzeichnet, dass** die Abdeckung im Verhältnis zur Breite der Folie (1) zentriert ist.

10. Verfahren gemäß irgendeines der Ansprüche 1 bis 8, **dadurch gekennzeichnet, dass** die Abdeckung im Verhältnis zur Breite der Folie (1) verschoben ist.

## Claims

1. Method for manufacturing a sheath from a film (1) made of a plastic material, according to which:
- one of the faces (1a) of the film (1) is flat-printed, except for an unprinted area (1b) which is left along one of its longitudinal edges (1c);
- the film (1) is folded in such a way that the unprinted area (1b) of the printed face (1a) overlaps with the opposite edge (1d) of the unprinted face (1e);
- continuous laser welding (3) is carried out along the overlap formed by the two film thicknesses.

2. Method according to claim 1, **characterised by** the fact that the sheath is cut crosswise in order to form, at the desired height, sleeves that are suitable for placement on a container.

3. Method according to claim 1, **characterised by** the fact that a shaping element (4) that is capable of separating the overlap formed by the sheath's opposite faces is placed within the sheath formed by folding the film (1).

4. Method according to claim 3, **characterised by** the fact that the shaping element (4) has a cooling system.

5. Method according to any one of claims 3 and 4, **characterised by** the fact that the shaping element's dimensions are roughly the same as those of the sheath's perimeter.

6. Method according to any one of claims 1 to 5, **characterised by** the fact that the film (1) is driven linearly at a constant speed with respect to the welding station (3), which is fixed.

7. Method according to claim 6, **characterised by** the fact that the film is driven at a speed of at least 200 m/min.

8. Method according to claim 1, **characterised by** the fact that the film (1) is made of polyethylene, whether co-extruded or not, and is around 40 µm to 120 µm thick.

9. Method according to any one of claims 1 to 8, **characterised by** the fact that the overlap is centred with respect to the breadth of the film (1).

10. Method according to any one of claims 1 to 8, **characterised by** the fact that the overlap is offset with respect to the breadth of the film (1).
